# EUROPÄISCHE PATENTSCHRIFT

(11) **EP 2 966 339 B1**
(45) Veröffentlichungstag und Bekanntmachung des Hinweises auf die Patenterteilung: **10.05.2017**
(21) Anmeldenummer: 15175685.5
(22) Anmeldetag: 07.07.2015
(51) Int. Cl.: F21S 8/02, F21V 21/04

(54) **LEUCHTE, ANORDNUNG FÜR EINE RASTERDECKE, VERFAHREN ZUM MONTIEREN EINER LEUCHTE, VERFAHREN ZUM DEMONTIEREN EINER LEUCHTE, SOWIE DEMONTAGEWERKZEUG**
LUMINAIRE, ASSEMBLY FOR A GRID CEILING, METHOD FOR MOUNTING A LUMINAIRE, METHOD FOR DISASSEMBLING A LUMINAIRE, AND DISASSEMBLY TOOL
ÉCLAIRAGE, SYSTEME POUR UN PLAFOND LUMINEUX A GRILLE, PROCEDE DE MONTAGE D'UN ECLAIRAGE, PROCEDE DE DEMONTAGE D'UN ECLAIRAGE ET OUTIL DE DEMONTAGE

(30) Priorität: 10.07.2014 DE 102014213468
(43) Veröffentlichungstag der Anmeldung: 13.01.2016
(73) Patentinhaber: H4X e.U., 8055 Graz (AT)
(72) Erfinder: Hierzer, Andreas, 8010 Graz (AT)
(74) Vertreter: Isarpatent

(56) Entgegenhaltungen:
- DE-U1- 8 409 216
- KR-U- 20110 003 394
- US-A- 3 885 478
- US-A- 4 424 554
- US-A1- 2008 086 962
- US-A1- 2011 239 503
- US-A1- 2014 003 050

## Beschreibung

### GEBIET DER ERFINDUNG

Die vorliegende Erfindung bezieht sich auf eine Leuchte zur Montage in einer Rasterdecke. Ferner betrifft die Erfindung eine Anordnung für eine Rasterdecke und ein Verfahren zum Montieren einer Leuchte.

### TECHNISCHER HINTERGRUND

Insbesondere Innenräume von Gebäuden, beispielsweise Büroräume oder Geschäftsräume, werden häufig mit abgehängten Decken ausgestattet. Derartige Decken können mit einer Tragkonstruktion und mit Deckenpaneelen ausgeführt werden, welche Bestandteile eines so genannten Rasterdeckensystems bilden.

Zur Beleuchtung eines mit einer abgehängten Decke ausgestattenen Innenraums können geeignete Leuchten im Bereich der Decke montiert werden. Insbesondere können derartige Leuchten zu diesem Zweck in die abgehängte Decke integriert werden.

Die US 4,424,554 A beschreibt eine deckenmontierte Leuchte mit Befestigungsmitteln, welche federvorgespannte Riegel beinhalten, die vom Monteur ausgelöst werden können.

Eine weitere Leuchte offenbart die KR 20110003394 U.

Aufgrund der Montageposition im Deckenbereich, die für den Monteur häufig ein Arbeiten über Kopfhöhe mit sich bringt, wäre es wünschenswert, wenn sich die Montage der Leuchte im Bereich einer Rasterdecke auf möglichst rasche und einfache Weise sowie kostengünstig bewerkstelligen ließe. Zudem wäre es wünschenswert, wenn auch ein Demontieren einer montierten Leuchte - zum Beispiel bei einem Umbau des Innenraumes oder wenn aus anderen Gründen die Leuchte abmontiert werden soll - auf einfache Weise und mit möglichst wenig Zeitbedarf und geringem Personalaufwand erfolgen könnte.

### ZUSAMMENFASSUNG DER ERFINDUNG

Vor diesem Hintergrund liegt der Erfindung somit die Aufgabe zu Grunde, eine verbesserte Leuchte bereitzustellen, die sich in einfacher Weise im Bereich einer Rasterdecke montieren und vorzugsweise auch auf einfache Weise wieder demontieren lässt. Darüber hinaus soll eine Rasterdecke entsprechend verbessert werden. Ferner ist es eine Aufgabe der Erfindung, ein Verfahren zum einfachen und raschen Montieren einer derart verbesserten Leuchte zu schaffen.

Diese Aufgabe wird erfindungsgemäß durch eine Leuchte mit den Merkmalen des Anspruchs 1 und/oder durch eine Anordnung für eine Rasterdecke mit den Merkmalen des Anspruchs 8 und/oder durch ein Verfahren mit den Merkmalen des Patentanspruchs 11 gelöst.

Demgemäß wird eine Leuchte zur Montage in einer Rasterdecke vorgeschlagen, wobei die Leuchte mindestens einen Schnapper aufweist. Der mindestens eine Schnapper ist erfindungsgemäß derart an der Leuchte angeordnet und derart ausgebildet, dass der mindestens eine Schnapper beim Montieren der Leuchte hinter einen Abschnitt eines Elements der Rasterdecke selbsttätig einschnappt. Durch das selbsttätige Einschnappen hintergreift der mindestens eine Schnapper den Abschnitt des Elements der Rasterdecke, um die Leuchte an der Rasterdecke zu halten.

Ferner wird erfindungsgemäß eine Anordnung für eine Rasterdecke vorgeschlagen, wobei die Anordnung mindestens ein Deckenprofilelement sowie mindestens eine derartige erfindungsgemäße Leuchte aufweist. Hierbei hintergreift mindestens ein bewegbarer Schnapper der mindestens einen Leuchte einen Abschnitt des Deckenprofilelements der Rasterdecke, wobei die mindestens eine Leuchte mittels des Hintergreifens des Deckenprofilelements durch den Schnapper an der Rasterdecke gehalten ist.

Die Erfindung stellt ferner ein Verfahren zum Montieren einer erfindungsgemäßen Leuchte in einer Rasterdecke bereit. Das Verfahren weist die nachfolgend angegebenen Schritte auf:
- eine erfindungsgemäße Leuchte wird bereitgestellt; und
- die Leuchte wird derart relativ zu mindestens einem Element der Rasterdecke, welches an einem vordefinierten und dem Element für die Bildung der Rasterdecke zugeordneten Bestimmungsort angeordnet und an dem Bestimmungsort fixiert ist, bewegt, dass mindestens ein Schnapper der Leuchte hinter einen Abschnitt des Elements der Rasterdecke selbsttätig einschnappt und durch das selbsttätige Einschnappen den Abschnitt des Elements der Rasterdecke hintergreift, um die Leuchte an der Rasterdecke zu halten.

Darüber hinaus wird ein Verfahren zum Demontieren einer erfindungsgemäßen Leuchte, welche in einer Rasterdecke montiert ist, bereitgestellt. Das Verfahren weist die nachfolgend angegebenen Schritte auf:
- Ein vorbestimmtes Demontagewerkzeug wird in einer Einführrichtung von einer Sichtseite der Rasterdecke her in einen Spalt zwischen einem Element der Rasterdecke und der Leuchte eingeführt;
- ein bewegbarer Schnapper der Leuchte, welcher einen Abschnitt des Elements der Rasterdecke zum Halten der Leuchte an der Rasterdecke hintergreift, wird mittels des Demontagewerkzeugs übergriffen; und
- es erfolgt ein Ziehen an dem Demontagewerkzeug im Wesentlichen entgegen der Einführrichtung, um den Schnapper mit einer Kraft zu beaufschlagen, welche bewirkt, dass der Schnapper außer Eingriff mit dem Abschnitt des Elements gelangt; bei dem Ziehen ist das Demontagewerkzeug in dem Spalt zwischen dem Element und der Leuchte geführt.

Ferner wird ein Demontagewerkzeug zum Demontieren einer erfindungsgemäßen und in einer Rasterdecke montierten Leuchte vorgeschlagen, wobei das Demontagewerkzeug insbesondere für die Demontage der Leuchte mittels des vorstehenden Verfahrens erfolgen kann. Das Demontagewerkzeug weist einen ersten Abschnitt, einen mit dem ersten Abschnitt verbundenen und sich quer zu dem ersten Abschnitt seitlich von diesem erstreckenden zweiten Abschnitt sowie eine mit dem zweiten Abschnitt verbundene Zunge auf. Die Zunge erstreckt sich hierbei in im Wesentlichen gleicher Richtung wie der erste Abschnitt von dem zweiten Abschnitt weg. Der erste Abschnitt ist bereichsweise als ein Handhabungsabschnitt zur Handhabung des Demontagewerkzeugs ausgebildet. Ein Teil des ersten Abschnitts, der zweite Abschnitt sowie die Zunge begrenzen eine Aussparung, wobei ein Teil der Aussparung als ein Schnapper-Aufnahmebereich zur abschnittsweisen Aufnahme eines Schnappers der Leuchte ausgebildet ist. Wenn der Schnapper in dem Schnapper-Aufnahmebereich abschnittsweise aufgenommen ist und an dem zweiten Abschnitt des Demontagewerkzeugs ansteht, dann steht die Zunge in Erstreckungsrichtung der Zunge von dem zweiten Abschnitt an dem Schnapper vorbei vor.

Eine der vorliegenden Erfindung zu Grunde liegende Idee besteht darin, die Geometrie zumindest eines Elements einer Rasterdecke zu nutzen, um die Leuchte mittels eines selbsttätigen Einschnappens eines an der Leuchte vorgesehenen Schnappers werkzeuglos im Bereich der Rasterdecke befestigen zu können. Hierdurch wird die Montage der Leuchte ganz erheblich vereinfacht, was sich gerade bei einer größeren Anzahl von zu montierenden Leuchten und bei großen Deckenflächen, wie diese etwa bei größeren Büro- oder Geschäftsräumen vorkommen können, als vorteilhaft erweisen kann. Eine Rasterdecke mit einer erfindungsgemäßen Anordnung lässt sich folglich mit verringertem Zeit- und Kostenaufwand installieren. Zudem sind von einer Sichtseite der Rasterdecke sichtbare und auffällige Befestigungselemente für die Leuchte oder dergleichen nicht erforderlich, so dass die Rasterdecke mit der montierten Leuchte vom ästhetischen Standpunkt her vorteilhaft besonders ansprechend gestaltet werden kann. Das bereitgestellte Demontageverfahren sowie das Demontagewerkzeug ermöglichen ein rasches und sicheres Demontieren der Leuchte bei Bedarf. Das Vorstehen der Zunge des Demontagewerkzeugs über den Schnapper vermeidet zudem ein Verhaken und Verklemmen des Demontagewerkzeugs beim Lösen des Schnappers, da die in dieser Weise ausgebildete Zunge bei dem Entriegelungsvorgang vorteilhaft in einem Spalt zwischen der Leuchte und dem Element der Rasterdecke, welches der Schnapper hintergreift, geführt werden kann.

Als ein Element der Rasterdecke soll vorliegend allgemein ein Bestandteil der Rasterdecke bezeichnet werden, wobei dieser Bestandteil in verschiedenster Art und Weise ausgebildet sein kann. Beispielsweise könnte das Element profil- oder schienenartig, wie etwa als Deckenprofilelement, aber stattdessen auch paneel- oder plattenartig, wie zum Beispiel in Gestalt einer Deckenplatte mit einem Ausschnitt zur Aufnahme der Leuchte oder ähnlich, oder in anderer Form ausgebildet sein.

Erfindungsgemäß weist die Leuchte ferner ein Schnappergehäuse auf. Hierbei ist der mindestens eine Schnapper in dem Schnappergehäuse bewegbar geführt. Das Schnappergehäuse kann somit eine zuverlässige, definierte Führung des Schnappers ermöglichen.

Erfindungsgemäß bilden der mindestens eine Schnapper und das Schnappergehäuse, in dem der mindestens eine Schnapper geführt ist, Komponenten einer Schnappereinheit. Ferner weist hierbei die Leuchte mindestens eine Nut auf, wobei die Schnappereinheit in der Nut festgelegt ist. Die Schnappereinheit kann somit insbesondere vorteilhaft vorgefertigt und beim Zusammenbau der Leuchte an der gewünschten Stelle innerhalb der Nut festgelegt werden.

Vorteilhafte Ausgestaltungen und Weiterbildungen der Erfindung ergeben sich aus den Unteransprüchen sowie aus der Beschreibung unter Bezugnahme auf die Figuren der Zeichnung.

In einer Ausgestaltung weist der mindestens eine Schnapper eine Gleitrampe auf. Die Gleitrampe ist derart angeordnet und ausgerichtet, dass sie beim Montieren der Leuchte der Rasterdecke zugewandt und zu einer Richtung, entlang der die Leuchte für das Montieren derselben in die Rasterdecke einsetzbar ist, geneigt ist. Auf diese Weise kann das Montieren der Leuchte weiter erleichtert werden, indem bei dem Montagevorgang das Element der Rasterdecke bereichsweise über die Gleitrampe gleiten und dadurch den Schnapper zurückdrücken kann.

In einer vorteilhaften Ausgestaltung ist der mindestens eine Schnapper federbelastet. Der Schnapper schnappt somit hinter dem Abschnitt des Elements der Rasterdecke zuverlässig ein.

In einer Ausgestaltung ist der mindestens eine Schnapper derart angeordnet und federbelastet, dass er bei dem Einschnappen selbsttätig in eine Position zurückkehrt, in welcher der mindestens eine Schnapper über einen Rand der Leuchte, insbesondere einen seitlichen Rand derselben, vorsteht. Dies erleichtert ein späteres Lösen der Schnapper zum Demontieren der Leuchte.

In einer bevorzugten Ausgestaltung ist der mindestens eine Schnapper in dem Schnappergehäuse verschiebbar geführt. Eine verschiebbare Führung des Schnappers kann relativ einfach und platzsparend realisiert werden. Ferner kann hierbei insbesondere eine ausreichend große Haltefläche des Schnappers zum Halten der Leuchte in einfacher Weise mit dem Element in Kontakt gebracht werden.

In einer Ausgestaltung ist die Schnappereinheit in der Nut geklemmt und dadurch zumindest längs der Nut in dieser festgelegt. Eine klemmende Befestigung der Schnappereinheit in der Nut kann eine zuverlässige reibschlüssige Fixierung der Schnappereinheit gegen ein Verschieben längs der Nut ermöglichen, wobei ein Einbringen von Bohrungen und dergleichen in die Leuchte zur Festlegung der Schnappereinheit vermieden wird. Zudem kann die Klemmung, falls Bedarf hierfür besteht, wieder gelöst, die Schnappereinheit in der Nut verschoben und an anderer Stelle wieder geklemmt werden.

In einer weiteren Ausgestaltung weist die Leuchte mehrere Schnapper auf, wobei mindestens zwei der Schnapper an entgegengesetzten Seiten der Leuchte angeordnet sind. Hierdurch kann die Leuchte vorteilhaft Elemente der Rasterdecke, die entgegengesetzten Seiten der Leuchte benachbart sind, hintergreifen, um die Leuchte noch zuverlässiger an der Rasterdecke zu halten.

Insbesondere können die mehreren Schnapper in gleicher Weise ausgebildet sein. Dies ermöglicht in der Herstellung der Leuchte und der Anordnung für die Rasterdecke durch die geringere Anzahl zu fertigender unterschiedlicher Einzelteile weitere Kostenersparnisse.

Bei einer bevorzugten Weiterbildung können mehrere Schnappereinheiten vorgesehen sein, welche jeweils ein Schnappergehäuse und jeweils einen Schnapper umfassen und ferner jeweils an der Leuchte festgelegt sind.

Hierzu können in einer Weiterentwicklung an der Leuchte mindestens zwei Nuten vorgesehen sein, die an unterschiedlichen Seiten der Leuchte angeordnet und zur Aufnahme der Schnappereinheiten bestimmt sind. Eine derartige Anordnung der Nuten kann zusammen mit mehreren Schnappereinheiten vielseitige Möglichkeiten der Anordnung der Schnapper an der Leuchte bieten.

Gemäß einer weiteren Weiterbildung weist die Leuchte mindestens zwei an einer Seite der Leuchte entlang einer Längsrichtung der Leuchte voneinander beabstandet angeordnete Schnapper auf, welche in im Wesentlichen gleicher Weise ausgebildet sind. Diese Ausgestaltung ermöglicht es, auch eine relativ langgestreckt ausgebildete Leuchte noch zuverlässiger an der Rasterdecke zu halten. Bei besonders großen Leuchtenlängen können insbesondere mehr als zwei an einer Längsseite der Leuchte voneinander beabstandet angeordnete Schnapper nützlich sein, um etwa ein Durchhängen der Leuchte unter deren Eigengewicht zu vermeiden.

In einer bevorzugten Ausgestaltung ist die Leuchte mit mindestens vier Schnappern ausgestattet, die vorzugsweise in gleicher Weise ausgebildet und geführt sind. Gemäß dieser Ausgestaltung sind zwei der Schnapper an einer ersten Seite der Leuchte voneinander beabstandet angeordnet, während zwei weitere der Schnapper an einer zweiten Seite der Leuchte voneinander beabstandet angeordnet sind. Auf diese Weise kann die Leuchte, ohne dass sie bei der Montage verkippt wird, auf einfache Weise zwischen zwei Elemente der Rasterdecke eingeführt und durch Einschnappen der Schnapper hinter Abschnitte dieser Elemente an der Rasterdecke zuverlässig montiert werden.

Vorteilhaft kann der Schnapper in einer Ausgestaltung mit einem Metallwerkstoff ausgebildet sein. Auf diese Weise kann ein robuster und belastbarer Schnapper erzielt werden.

In einer bevorzugten Ausgestaltung handelt es sich bei dem Element der Rasterdecke, welches der Schnapper hintergreift, um ein Profil, insbesondere ein Deckenprofilelement der Rasterdecke.

Ein Deckenprofilelement soll im Rahmen der vorliegenden Anmeldung allgemein als ein Profilelement verstanden werden, welches einen Bestandteil der Rasterdecke bildet.

Das Deckenprofilelement kann gemäß einer bevorzugten Ausgestaltung als eine Komponente einer Tragkonstruktion der Rasterdecke ausgebildet sein, wobei das Deckenprofilelement insbesondere dafür ausgebildet sein kann, Deckenelemente der Rasterdecke zu tragen. Mit dieser Ausgestaltung kann ein Deckenprofilelement der Tragkonstruktion vorteilhaft auch zur einfachen und raschen Befestigung der Leuchte genutzt werden. Die Deckenelemente der Rasterdecke können beispielsweise als Deckenpaneele, Deckenplatten oder ähnlich ausgeführt sein. Insbesondere kann vorgesehen sein, dass das Deckenprofilelement von den Deckenelementen getrennt an seinem Bestimmungsort, etwa im Bereich unterhalb einer Rohdecke, angeordnet und fixiert werden kann.

In einer alternativen Ausgestaltung kann das Deckenprofilelement in ein Deckenelement, beispielsweise ein Deckenpaneel oder eine Deckenplatte, integriert oder mit diesem fest verbunden sein. Beispielsweise kann in einer Variante dieser Ausgestaltung das Deckenelement mit einem Ausschnitt versehen sein, in dessen Randbereich ein oder mehrere Deckenprofilelement(e) vorgesehen und mit dem Deckenelement verbunden sind, zum Beispiel nach Art eines Schachts oder ähnlich.

Gemäß einer Ausgestaltung ist das Deckenprofilelement zumindest in einem Bereich seines Querschnitts umgekehrt T-förmig ausgebildet. Bei dieser Ausgestaltung hintergreift der mindestens eine Schnapper der mindestens einen Leuchte abschnittsweise einen Flanschabschnitt des umgekehrt T-förmigen Bereichs. Ein derartiges Deckenprofilelement kann beispielsweise hinsichtlich seiner mechanischen Belastbarkeit vorteilhaft sein. In anderen Ausgestaltungen kann der Querschnitt des Deckenprofilelements jedoch stattdessen anders ausgebildet sein.

Gemäß einer weiteren Ausgestaltung weist die Anordnung ferner mindestens ein Deckenelement auf, welches abschnittsweise auf dem Deckenprofilelement aufliegt, wobei die mindestens eine Leuchte auf einer Sichtseite der Rasterdecke mit dem Deckenelement oder dem Deckenprofilelement oder beiden insbesondere im Wesentlichen bündig sein kann. Eine derartige bündige Anordnung kann vom ästhetischen Standpunkt zu bevorzugen sein.

Das Deckenprofilelement kann in einer Weiterbildung als ein schienenartiges Bauteil, insbesondere aus einem Metallwerkstoff, ausgebildet sein.

In einer weiteren Ausgestaltung kann vorgesehen sein, dass mindestens zwei Elemente der Rasterdecke, insbesondere zwei Deckenprofilelemente, jeweils an einem vordefinierten Bestimmungsort, der dem Element für die Bildung der Rasterdecke jeweils zugeordnet ist, angeordnet und an dem Bestimmungsort fixiert werden. Beispielsweise können die Elemente in einem vordefinierten, an die Abmessungen der Leuchte angepassten Abstand voneinander angeordnet und befestigt werden. Bei dieser Ausgestaltung wird die Leuchte zum Montieren derselben zwischen die mindestens zwei Elemente eingeschoben. Dies geschieht derart, dass der mindestens eine Schnapper beim Montieren der Leuchte hinter einen Abschnitt eines der Elemente der Rasterdecke selbsttätig einschnappt und hierdurch einen Abschnitt des Elements der Rasterdecke hintergreift, um die Leuchte an der Rasterdecke zu halten.

Gemäß einer weiteren Ausgestaltung des Montageverfahrens kann eine Leuchte, die mindestens zwei an entgegengesetzten Seiten der Leuchte angeordnete Schnapper aufweist, vorteilhaft in der Weise zwischen die mindestens zwei Elemente eingeschoben werden, dass jeder der Schnapper hinter einen Abschnitt eines zugeordneten der beiden Elemente einschnappt.

Bei einer Weiterentwicklung des Verfahrens zum Demontieren der Leuchte wird bei dem Ziehen mittels des vorbestimmten Demontagewerkzeugs eine Kraft auf die Gleitrampe des Schnappers ausgeübt. Insbesondere kann hierdurch vorteilhaft durch ein Ziehen an dem Demontagewerkzeug im Wesentlichen längs jener Richtung, in der die Leuchte mittels des Schnappers gehalten ist, zum Beispiel längs einer zum Boden vertikalen Richtung, mit Hilfe der Gleitrampe eine Kraft auf den Schnapper ausgeübt werden, die den Schnapper quer zu dieser Zugrichtung verschiebt und dadurch mit dem hintergriffenen Element der Rasterdecke außer Eingriff bringt.

In einer Ausgestaltung des Demontagewerkzeugs ist eine Begrenzung des Schnapper-Aufnahmebereichs abschnittsweise durch einen an dem zweiten Abschnitt ausgebildeten Abschlussrand sowie durch zueinander im Wesentlichen parallele Randabschnitte des ersten Abschnitts und der Zunge gebildet. Ferner setzt sich bei dieser Ausgestaltung die Aussparung mit an die parallelen Randabschnitte des ersten Abschnitts bzw. der Zunge anschließenden schrägen Randabschnitten des ersten Abschnitts und der Zunge fort. Hierbei verlaufen die schrägen Randabschnitte zu den im Wesentlichen parallelen Randabschnitten des ersten Abschnitts und der Zunge geneigt, und der Schnapper ist durch einen Zwischenraum zwischen den schrägen Randabschnitten in den Schnapper-Aufnahmebereich einführbar. Die parallelen Randabschnitte, die insbesondere im Wesentlichen senkrecht zu dem Abschlussrand und in der vorgesehenen Zugrichtung des Demontagewerkzeugs verlaufen können, ermöglichen es der Abschlusskante der Aussparung, bei dem Ziehen zum Lösen des Schnappers über die Gleitrampe desselben zu gleiten. Der schräge Randabschnitt der Zunge ermöglicht ein vereinfachtes Einführen des Schnappers in den Zwischenraum und den Schnapper-Aufnahmebereich. Dies ist beim Lösen des Schnappers mittels Einführen des Demontagewerkzeugs durch einen Spalt zwischen der Leuchte und dem hintergriffenen Element der Rasterdecke nützlich, da in diesem Fall der Schnapper von einer Sichtseite der Rasterdecke her häufig kaum sichtbar sein wird. Der schräge Randabschnitt des ersten Abschnitts kann dazu beitragen, beim Ziehen am Demontagewerkzeug mit Hilfe des Handhabungsabschnitts die Zugkraft wirksam auf den Schnapper aufzubringen und Momente um den Schnapper, die ein Verkanten oder Klemmen des Demontagewerkzeugs nach sich ziehen könnten, zu vermeiden.

In einer weiteren Ausgestaltung des Demontagewerkzeugs können die beiden schrägen Randabschnitte des ersten Abschnitts und der Zunge im Wesentlichen parallel zueinander verlaufen.

Gemäß einer vorteilhaften Weiterbildung kann das Demontagewerkzeug plattenartig, insbesondere aus einem flachen Material, beispielsweise einem Blech, hergestellt sein. Ein derartiges flaches Demontagewerkzeug ist für ein Einführen in einen Spalt zwischen der Leuchte und dem Element der Rasterdecke beim Demontieren der Leuchte vorteilhaft.

In einer Ausgestaltung kann das Demontagewerkzeug aus einem Metallblech, beispielsweise einem mit einem Stahl oder einem rostfreien Stahl gebildeten Blech, ausgestanzt sein. Ein derart ausgebildetes Werkzeug ist kostengünstig herstellbar.

Die obigen Ausgestaltungen und Weiterbildungen lassen sich, sofern dies sinnvoll ist, beliebig miteinander kombinieren. Weitere mögliche Ausgestaltungen, Weiterbildungen und Verbesserungen der Erfindung umfassen auch nicht ausdrücklich genannte Kombinationen von zuvor oder im Folgenden bezüglich der Ausführungsbeispiele beschriebenen Merkmalen der Erfindung. Insbesondere wird hierbei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die Erfindung wird nachfolgend anhand der in den schematischen Figuren angegebenen Ausführungsbeispiele näher erläutert. Hierbei zeigen
- Fig. 1: eine perspektivische Ansicht einer Leuchte gemäß einem Ausführungsbeispiel der Erfindung;
- Fig. 2: eine perspektivische, vergrößerte Ansicht eines Teilbereichs der Leuchte der Fig. 1;
- Fig. 3: eine Rasterdecke und eine Leuchte gemäß dem Ausführungsbeispiel in einer perspektivischen Ansicht von unten, zur Veranschaulichung eines Montagevorgangs, wobei die Leuchte in Fig. 3 noch nicht mit der Rasterdecke in Kontakt gebracht wurde;
- Fig. 4: die Rasterdecke und die Leuchte aus Fig. 3, in einem Zustand, der bei der Montage der Leuchte auf den Zustand der Fig. 3 folgt, wobei die Leuchte in Fig. 4 noch nicht vollständig montiert ist, nebst eines Details D1, welches den Bereich einer Schnappereinheit der Leuchte in diesem Zustand vergrößert zeigt;
- Fig. 5: die Rasterdecke und die Leuchte aus Fig. 3, wobei die Montage der Leuchte abgeschlossen und die Leuchte fertig montiert ist;
- Fig. 6: die montierte Leuchte der Fig. 5 nebst Teilbereichen der Rasterdecke in einer Querschnittsdarstellung;
- Fig. 7: die Rasterdecke und die Leuchte gemäß dem Ausführungsbeispiel im montierten Zustand der Fig. 5, wobei in Vorbereitung einer Demontage der Leuchte ein Demontagewerkzeug in einen Spalt zwischen der Leuchte und einem Deckenprofilelement einer Tragkonstruktion der Rasterdecke eingeführt wird;
- Fig. 8: die Rasterdecke und die Leuchte gemäß dem Ausführungsbeispiel, in einem Zustand, der bei der Demontage der Leuchte auf den Zustand der Fig. 7 folgt und in dem das Demontagewerkzeug bereits in den Spalt eingeführt ist, nebst eines Details D2, welches ein Übergreifen eines Schnappers der Leuchte mittels des Demontagewerkzeugs zeigt und in dem ein Deckenelement und Bereiche eines Deckenprofilelements zur besseren Übersicht weggelassen wurden; und
- Fig. 9: die Rasterdecke und die Leuchte gemäß dem Ausführungsbeispiel beim Entriegeln und Demontieren der Leuchte in einem Zustand, der auf den Zustand der Fig. 8 folgt.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erläuterung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt.

In den Figuren der Zeichnung sind gleiche, funktionsgleiche und gleich wirkende Elemente, Merkmale und Komponenten - sofern nichts Anderes ausgeführt ist - jeweils mit denselben Bezugszeichen versehen.

### BESCHREIBUNG VON AUSFÜHRUNGSBEISPIELEN

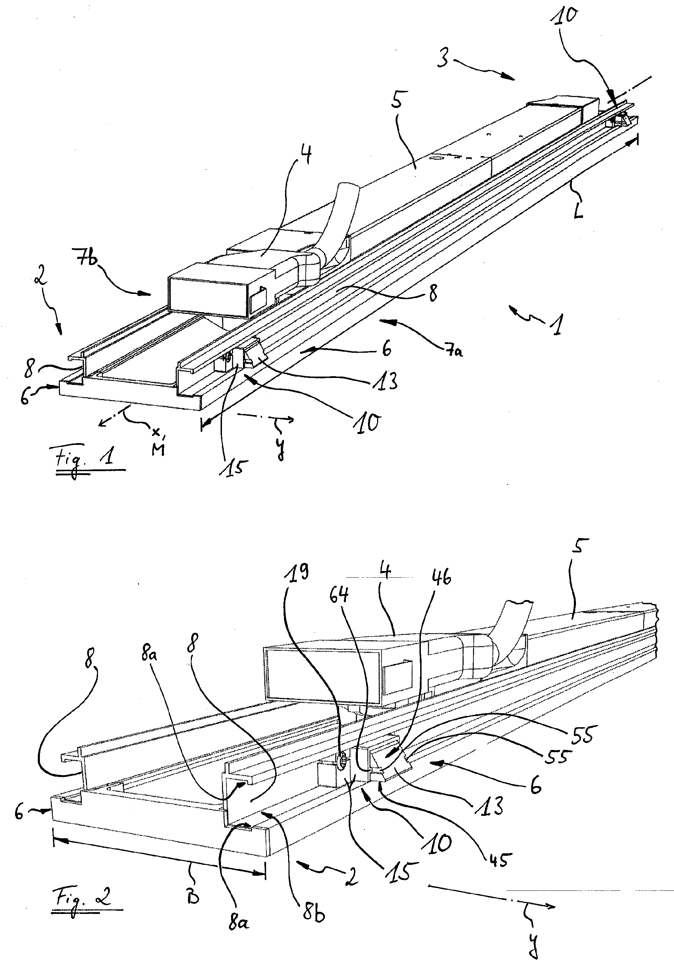

Fig. 1 zeigt eine Leuchte 1 zur Montage in einer Rasterdecke gemäß einem Ausführungsbeispiel der vorliegenden Erfindung. Die Leuchte 1 weist eine im Wesentlichen rechteckige Grundform auf. Eine Längsrichtung der Leuchte 1 ist in Fig. 1 mit dem Bezugszeichen x, eine Querrichtung der Leuchte 1 mit dem Bezugszeichen y gekennzeichnet. Bei dem gezeigten Beispiel können eine Breite B der Leuchte 1 bevorzugt ungefähr B = 100 mm und eine Länge L der Leuchte 1 etwa L = 1200 mm betragen, wobei es sich versteht, dass diese Maße hier nur beispielhaft angegeben sind und die Breite B sowie die Länge L in einer Vielzahl nützlicher und vorteilhafter Varianten abweichend hiervon gewählt werden können. Beispielsweise könnte bei einer Breite B von etwa B = 100 mm die Länge L gemäß einem alternativen Ausführungsbeispiel etwa L = 2400 mm betragen.

Die Leuchte 1 ist in Fig. 1 perspektivisch derart gezeigt, dass die in einem montierten Zustand der Leuchte 1 nicht sichtbare Oberseite der Leuchte 1 in der Figur zu sehen ist. Im Bereich dieser Oberseite weist die Leuchte 1 eine elektrische Anschlusseinrichtung 4 auf. Ferner ist in Fig. 1 eine Abdeckung 5, die beispielsweise als Abdeckblech ausgeführt sein kann, erkennbar. Die Abdeckung 5 deckt insbesondere elektrische und/oder elektronische Komponenten der Leuchte 1 ab.

Wie aus Fig. 1 und 2 erkennbar, weist die Leuchte 1 an entgegengesetzten Längsseiten 7a, 7b Nuten 8 auf, die sich in Längsrichtung x der Leuchte 1 über die gesamte Länge L erstrecken und nach außen hin offen sind. Der Querschnitt jeder der beiden Nuten 8 ist bei dem gezeigten Beispiel entlang der Längsrichtung x im Wesentlichen konstant und im Wesentlichen T-förmig, wobei bei dem in den Figuren dargestellten Ausführungsbeispiel die in der Figur nach oben und unten weisenden Schenkel der T-Form vergleichsweise kurz ausgeführt sind, während eine Öffnung 8b der jeweiligen Nut 8 relativ weit ist. Beidseits der Öffnung 8b der Nut 8 vorgesehene Hinterschnitte 8a sind somit bei diesem Beispiel relativ flach.

In den Nuten 8 sind bei der in Fig. 1 und 2 gezeigten Leuchte 1 insgesamt vier Schnappereinheiten 10 angeordnet. Von den Schnappereinheiten 10 sind zwei an einer ersten Längsseite 7a der Leuchte 1 und zwei weitere an einer der ersten Längsseite 7a entgegengesetzten zweiten Längsseite 7b der Leuchte 1 angeordnet. In Fig. 1 sind nur die zwei Schnappereinheiten 10 auf der Seite 7a sichtbar, von welchen eine einem Endbereich 2 der Leuchte 1 und die andere einem entgegengesetzten Endbereich 3 der Leuchte 1 benachbart angeordnet ist. Die Schnappereinheiten 10 auf der Seite 7a sind somit entlang der Längsrichtung x voneinander beabstandet. Die beiden Schnappereinheiten 10 auf der Seite 7b sind in Fig. 1 nicht sichtbar, jedoch bei dem gezeigten Beispiel in Bezug auf eine Mittenachse M der Leuchte 1 in Längsrichtung x in in etwa symmetrischer Weise zu den Schnappereinheiten 10 auf der Seite 7a angeordnet.

Wird die Länge L in Varianten des Ausführungsbeispiels z. B. größer als L = 1200 mm gewählt, z. B. zu 2400 mm, dann können an jeder Längsseite 7a, 7b der Leuchte 1 drei oder vier voneinander beanstandete Schnappereinheiten 10 angeordnet sein, woraus sich eine Gesamtanzahl von sechs bzw. acht Schnappereinheiten 10 je Leuchte ergeben kann. Auch eine noch größere Anzahl von Schnappereinheiten 10 je Leuchte wäre denkbar.

Die Schnappereinheiten 10 der Leuchte 1 sind in gleicher Weise ausgebildet. Jede der Schnappereinheiten 10 weist einen bewegbaren Schnapper 13 und ein Schnappergehäuse 15 auf, wobei der Schnapper 13 in dem zugeordneten Schnappergehäuse 15 geradlinig verschiebbar angeordnet und geführt ist. In jedem der Schnappergehäuse 15 ist ferner ein in den Figuren nicht sichtbares Federelement vorgesehen, welches den Schnapper 13 mit einer Federkraft beaufschlagt, wodurch dieser federbelastet ist. Der Schnapper 13 ist bei dem Ausführungsbeispiel aus einem Metallwerkstoff gefertigt.

Die Schnappergehäuse 15 sind derart ausgebildet, dass sie entlang der Längsrichtung x der Leuchte 1 in die Nuten 8 eingeschoben werden können. Nach dem Einschieben in die Nut 8 werden die Schnappergehäuse 15 jeweils bevorzugt mittels einer oder mehrerer Schrauben 19 in der jeweiligen Nut 8 verklemmt und auf diese Weise die jeweilige Schnappereinheit 10 an der Leuchte 1 fixiert. Während die Hinterschnitte 8a das Schnappergehäuse 15 in Querrichtung y halten, ist das Schnappergehäuse 15 in Längsrichtung x reibschlüssig in der Nut 8 fixiert. Die klemmende Fixierung der Schnappereinheiten 10 in der Nut 8 bietet vielfältige Möglichkeiten, die Schnappereinheiten 10 zu positionieren.

In dem in den Fig. 1 und 2 gezeigten Zustand stehen die Schnapper 13 der Schnappereinheiten 10 unter Wirkung der Federkraft jeweils über einen zugeordneten seitlichen Rand 6 im Bereich der Längsseite 7a bzw. 7b der Leuchte 1 nach außen vor, während die Schnappergehäuse 15 über diesen seitlichen Rand 6 nicht überstehen.

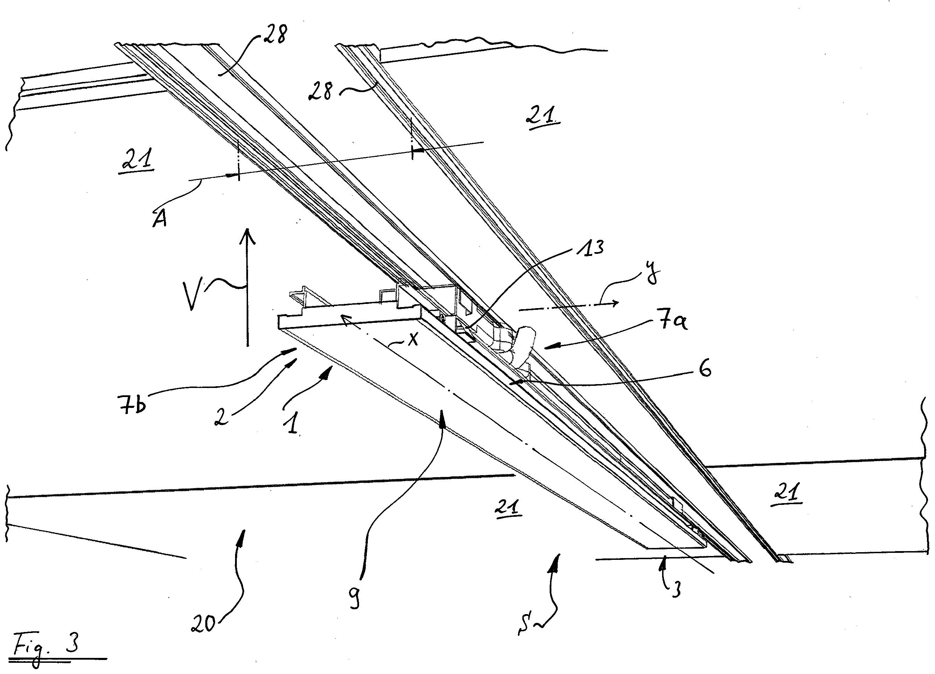

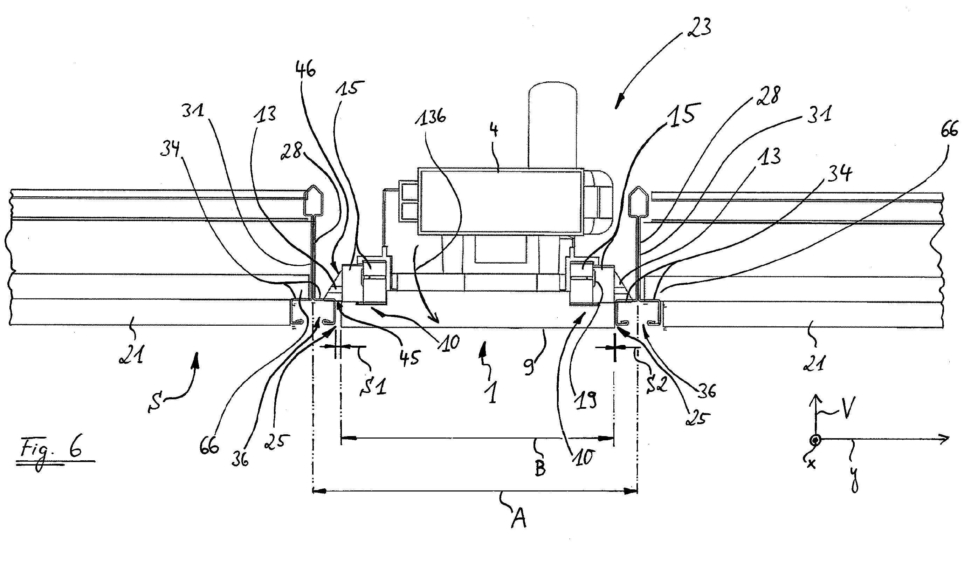

Die Figuren 3 bis 5 zeigen eine Rasterdecke 20 mit Deckenelementen 21, die bei dem gezeigten Beispiel paneelartig ausgebildet sind, und mit einer Tragkonstruktion zum Tragen insbesondere der Deckenelemente 21. Die Tragkonstruktion beinhaltet Deckenprofilelemente 28, die beispielsweise aus Metall hergestellt sein können. Eine Sichtseite der Rasterdecke 20 ist mit dem Bezugszeichen S bezeichnet. In den Figuren ist die Rasterdecke 20 nur bereichsweise dargestellt, wobei nur Abschnitte zweier Deckenprofilelemente 28 sowie einiger Deckenelemente 21 zu sehen sind. Die beiden in den Fig. 3 bis 5 dargestellten Deckenprofilelemente 28 verlaufen als Profilschienen beispielhaft in im Wesentlichen horizontaler Richtung und im Wesentlichen parallel zueinander in einem Abstand A, wie in Fig. 3 und zusätzlich in Fig. 6 angedeutet.

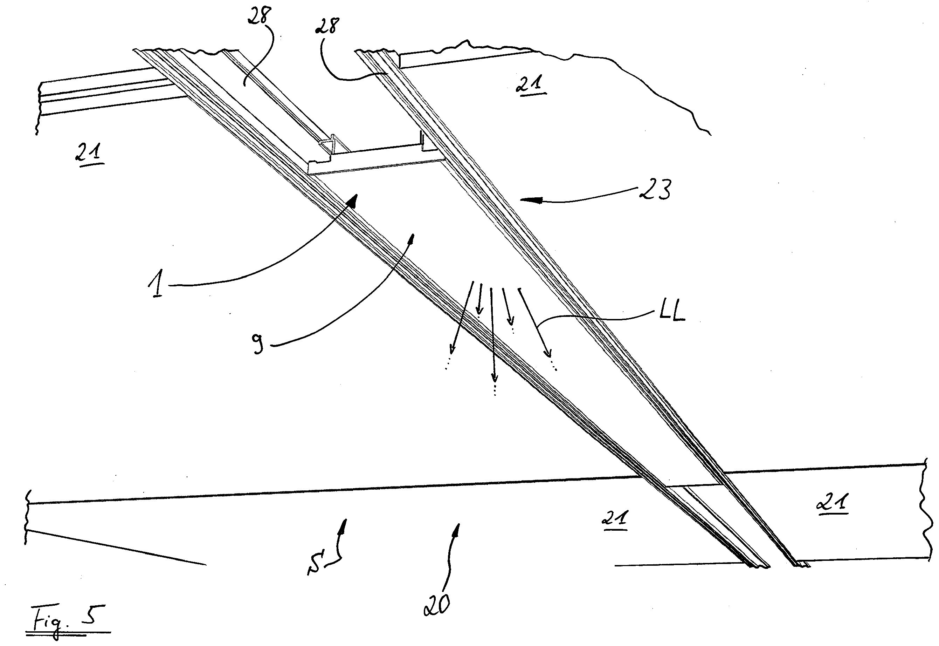

In Fig. 3 ist ferner eine Leuchte 1 gemäß dem Ausführungsbeispiel in einer Position unterhalb der beiden Deckenprofilelemente 28 gezeigt. Die Leuchte 1 ist dafür vorgesehen, derart in dem Zwischenraum zwischen den beiden dargestellten Deckenprofilelementen 28 montiert zu werden, dass eine Unterseite der Leuchte 1 mit den Deckenelementen 21 und den Deckenprofilelementen 28 in etwa bündig abschließt. Auf dieser Unterseite weist die Leuchte 1 einen Lichtaustrittsbereich 9 auf, der bei diesem Beispiel im Wesentlichen rechteckig ist. Beispielsweise kann der Lichtaustrittsbereich 9 mit einer lichtdurchlässigen Scheibe oder Platte gebildet sein, welche Licht LL, siehe Fig. 5, das von in den Figuren nicht dargestellten Lichterzeugungseinrichtungen der Leuchte 1 bereitgestellt wird, für die Beleuchtung des zu beleuchtenden Raumes hindurchtreten und zur Leuchtenunterseite hin austreten lässt. Es versteht sich aber, dass der Lichtaustrittsbereich 9 alternativ auf vielerlei andere Art und Weise ausgebildet sein kann.

Wie z. B. aus Fig. 6 zu erkennen, sind die Deckenprofilelemente 28 in ihrem Querschnitt bereichsweise umgekehrt T-förmig mit einem Stegabschnitt 31 und einem Gurt- oder Flanschabschnitt 34 ausgebildet. Der Flanschabschnitt 34 selbst setzt sich in einem nutartigen Profil 36 mit einer umgekehrt T-förmigen Geometrie fort. Bei dem gezeigten Ausführungsbeispiel verläuft der Flanschabschnitt 34 im Wesentlichen senkrecht zum Stegabschnitt 31.

Die entlang der Querrichtung y verschiebbaren Schnapper 13 weisen jeweils eine Haltefläche 45 auf, die sich im Wesentlichen parallel zu der durch die Längsrichtung x und die Querrichtung y aufgespannten x-y-Ebene erstreckt, siehe Fig. 1 und 6. Eine zweite Fläche des Schnappers 13 ist hingegen schräg zur x-y-Ebene ausgerichtet und bildet eine Gleitrampe 46. Vorteilhaft sind die Schnapper 13 ferner mit Führungsnuten 55 ausgestattet, in die für eine weiter verbesserte verschiebbare Führung der Schnapper 13 zugeordnete Vorsprünge 64 des Schnappergehäuses 15 gleitend eingreifen.

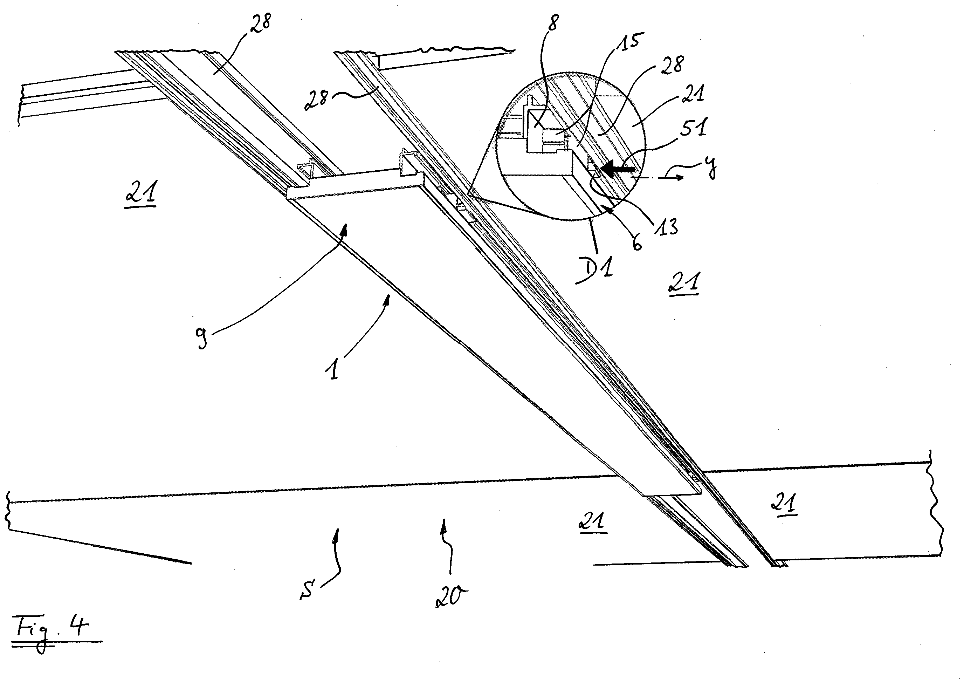

Zur Montage wird die Leuchte 1 in vertikaler Richtung V nach oben auf die Deckenprofilelemente 28 hinzubewegt, siehe Fig. 3. Die Gleitrampen 46 der Schnapper 13 sind hierbei der Rasterdecke 20 zugewandt und gelangen bei fortgesetztem Einschieben der Leuchte 1 zwischen die Deckenprofilelemente 28 in Kontakt mit den Deckenprofilelementen 28. Hierdurch werden durch die Wirkung der gegen die Vertikalrichtung V geneigten Gleitrampen 46 die federbelasteten Schnapper 13 gegen die jeweilige Feder in Richtung des Pfeils 51 parallel zur Querrichtung y in das jeweilige Schnappergehäuse 15 zurückgedrückt, siehe die Detaildarstellung D1 in Fig. 4.

Beim weiteren Einschieben der Leuchte 1 zwischen die Deckenprofilelemente 28 in vertikaler Richtung V gelangen die Schnapper 13 hinter Teile der Flanschabschnitte 34 der beidseitig der Leuchte 1 befindlichen Deckenprofilelemente 28, siehe Fig. 6. Die Schnapper 13 bewegen sich unter Wirkung der Federkraft selbsttätig hinter den jeweiligen Flanschabschnitt 34 und hintergreifen diesen bereichsweise. Mit anderen Worten, die Schnapper 13 bewegen sich unter Wirkung der Federelemente in ihre jeweiligen Positionen zurück, in denen die Schnapper 13 über die Ränder 6 überstehen.

Auf diese Weise ist die Leuchte 1 sicher gehalten. Es bedarf somit keines Werkzeugs, insbesondere keines Schraubendrehers oder dergleichen, um die Leuchte 1 in der Rasterdecke 20 montieren zu können, sondern die Leuchte 1 wird einfach zwischen die Profilelemente 28 eingeschoben, bis die Schnapper 13 einschnappen. Vorteilhaft kann der Monteur anhand eines für ihn wahrnehmbaren "Klick"- oder "Schnapp"-Geräusches beim Einschnappen der Schnapper 13 erkennen, dass die Schnapper 13 das jeweils zugeordnete Profil 28 hintergriffen haben.

Wie aus Fig. 6 ferner ersichtlich ist, liegen Abschnitte 66 der Deckenelemente 21 auf von der Leuchte 1 weggewandten Teilbereichen der Deckenprofilelemente 28 auf. Die Deckenprofilelemente 28 bilden Bestandteile der Tragkonstruktion für die Rasterdecke 20. In der Rasterdecke 20 ist die Leuchte 1 bei dem gezeigten Ausführungsbeispiel zwischen den Deckenprofilelementen 28 allein durch die Wirkung der vier Schnapper 13, welche die Profilelemente 28 hintergreifen, gehalten. Die Deckenprofilelemente 28 und die Leuchte 1 bilden Komponenten einer Anordnung 23 für die Rasterdecke 20.

Es sei darauf hingewiesen, dass mehrere Leuchten 1 in deren Längsrichtung x aneinander anschließend in gleicher Weise zwischen den Deckenprofilelementen 28 montiert werden können.

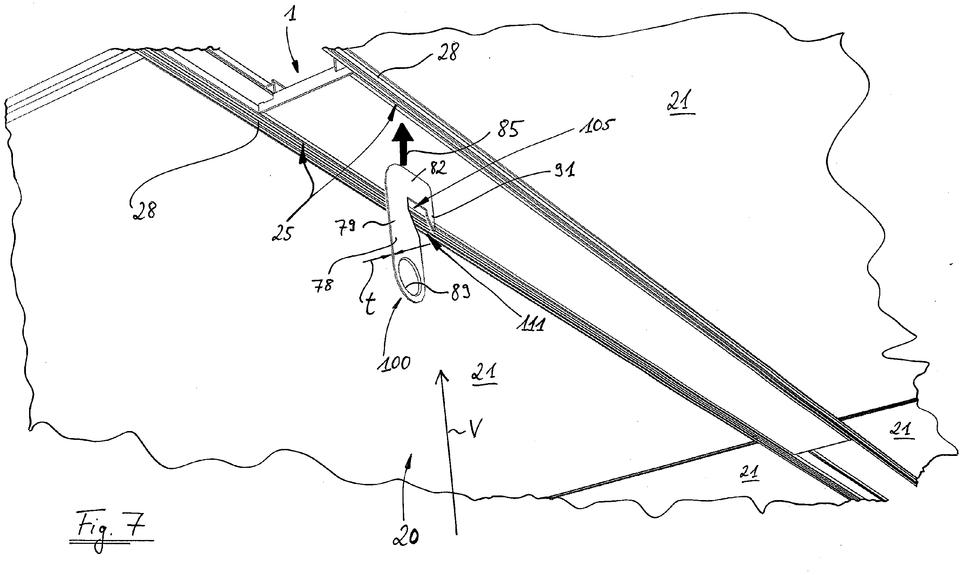

Ein Demontieren der Leuchte 1 ist in den Figuren 7, 8 und 9 beispielhaft dargestellt. Zum Demontieren der Leuchte 1 werden ein Demontagewerkzeug 78 oder mehrere gleichartige Demontagewerkzeuge 78 verwendet, siehe Fig. 7. Das Demontagewerkzeug 78 ist als ein Blechteil ausgeführt, beispielsweise aus einem Stahlblech ausgestanzt, mit einer Blechstärke t von zum Beispiel in etwa t = 1 mm. Das Demontagewerkzeug 78 dient dem Lösen oder Entriegeln der Schnapper 13 und kann somit auch als Entriegelungsblech bezeichnet werden.

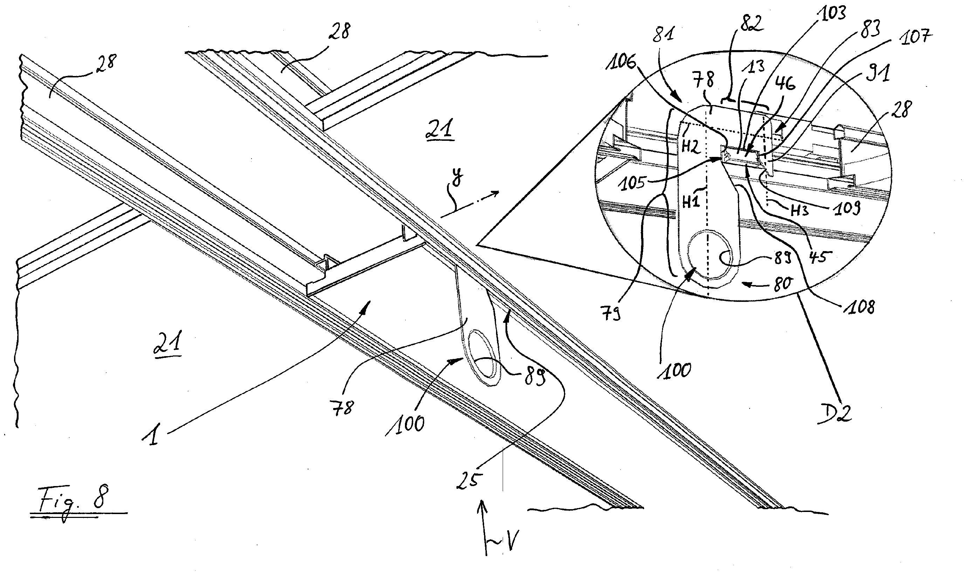

Wie insbesondere das Detail D2 in Fig. 8 deutlich macht, weist das Demontagewerkzeug 78 einen ersten Abschnitt 79, einen mit dem ersten Abschnitt 79 verbundenen zweiten Abschnitt 82 und eine mit dem zweiten Abschnitt 82 verbundene Zunge 91 auf. Der erste Abschnitt 79 ist langgestreckt, erstreckt sich entlang einer Haupterstreckungsrichtung H1 und ist in einem ersten Endbereich 80 mit einem kreisrunden Loch 89 versehen. Der mit dem Loch 89 versehene Abschnitt des ersten Abschnitts 79 bildet einen Handhabungsabschnitt 100 des Werkzeugs 78.

In einem zweiten Endbereich 81 des ersten Abschnitts 79 schließt sich der zweite Abschnitt 82 an den ersten Abschnitt 79 an, wobei sich der zweite Abschnitt 82 quer zu dem ersten Abschnitt 79 und seitlich von diesem weg entlang einer Haupterstreckungsrichtung H2 erstreckt. In gleicher Richtung wie der erste Abschnitt 79 erstreckt sich an einem von dem Endbereich 81 entfernten Ende 83 des zweiten Abschnitts 82 eine Zunge 91, die schmäler und kürzer ist als der erste Abschnitt 79, von dem zweiten Abschnitt 82 weg. Eine Haupterstreckungsrichtung H3 der Zunge 91 ist zu der Haupterstreckungsrichtung H1 des ersten Abschnitts 79 im Wesentlichen parallel. Der erste Abschnitt 79, der zweite Abschnitt 82 und die Zunge 91 bilden somit näherungsweise eine asymmetrische U-Form, bei der ein Schenkel deutlich verkürzt und schmaler ausgebildet ist.

Um die Leuchte 1 zu demontieren, wird das Demontagewerkzeug 78 in Richtung des Pfeils 85, siehe Fig. 7, von der Sichtseite S in einen Spalt 25 zwischen dem seitlichen Rand 6 der Leuchte 1 und dem benachbarten Deckenprofilelement 28 eingeführt. Das Einführen geschieht bei dem Ausführungsbeispiel im Wesentlichen entlang der vertikalen Richtung V. Um die Position des Schnappers 13 bei montierter Leuchte 1 von der Sichtseite S her aufzufinden, kann das Demontagewerkzeug 78 entlang der Leuchte 1 durch den Spalt 25 bewegt werden.

Auf diese Weise kann der Schnapper 13 mittels des Demontagewerkzeugs 78 aufgefunden werden, d.h. das Demontagewerkzeug 78 trifft auf den Schnapper 13. Der Schnapper 13 kommt sodann durch ein geringfügiges Herabziehen des Demontagewerkzeugs 78 entgegen der Pfeilrichtung 85 in einem Schnapper-Aufnahmebereich 105 des Demontagewerkzeugs 78 zu liegen und wird somit "eingefangen", wobei das Demontagewerkzeug 78 den Schnapper 13 übergreift, siehe Fig. 8.

Der Schnapper-Aufnahmebereich 105 befindet sich zwischen der Zunge 91 einerseits und dem ersten Abschnitt 79 andererseits und ist durch einen Teil einer Aussparung 102 gebildet, die zu einem Außenrand des Demontagewerkzeugs 78 hin offen ist und durch einen Teil des ersten Abschnitts 79, den zweiten Abschnitt 82 sowie durch die Zunge 91 begrenzt wird. Im Einzelnen begrenzen ein an dem zweiten Abschnitt 82 ausgebildeter Abschlussrand 103, ein zu dem Abschlussrand 103 im Wesentlichen senkrecht verlaufender Randabschnitt 106 des ersten Abschnitts 79, ein zu dem Abschlussrand 103 im Wesentlichen senkrecht verlaufender Randabschnitt 107 der Zunge 91, ein zu dem Abschlussrand 103 geneigt verlaufender schräger Randabschnitt 108 des ersten Abschnitts 79 und ein ebenfalls zu dem Abschlussrand 103 geneigt verlaufender schräger Randabschnitt 109 der Zunge 91 die Aussparung 102. Die beiden Randabschnitte 106 und 107 erstrecken sich von dem Abschlussrand 103 weg, wobei sich der Randabschnitt 108 an den Randabschnitt 106 und der Randabschnitt 109 an den Randabschnitt 107 anschließen. Die Randabschnitte 106 und 107 verlaufen im Wesentlichen parallel zueinander. Auch die Randabschnitte 108 und 109 können im Wesentlichen zueinander parallel ausgebildet sein. Der Schnapper-Aufnahmebereich 105 wird abschnittsweise begrenzt durch den Abschlussrand 103 sowie die Randabschnitte 106 und 107.

Im Verwendungszustand des Demontagewerkzeugs 78, siehe das Detail D2, verläuft der Abschlussrand 103 im Wesentlichen senkrecht zu einer Zugrichtung, die bei dem gezeigten Beispiel der Vertikalen V entspricht.

Wie das Detail D2 in Fig. 8 deutlich macht, steht die Zunge 91 entlang ihrer Haupterstreckungsrichtung H3 über den Schnapper 13 in der Figur nach unten hin, d. h. in Zugrichtung, über und erstreckt sich hierdurch an dem Schnapper 13 vorbei, wenn der Schnapper 13 in dem Schnapper-Aufnahmebereich 105 abschnittsweise aufgenommen ist und, wie in dem Detail D2, an dem an dem zweiten Abschnitt 82 ausgebildeten Abschlussrand 103 ansteht.

Das Einfädeln des Demontagewerkzeugs 78 in der Weise, dass der Schnapper 13 in dem Schnapper-Aufnahmebereich 105 zu liegen kommt, wird durch den an der Zunge 91 ausgebildeten schrägen Randabschnitt 109 erleichtert, durch den sich die Zunge 91 an ihrem Ende etwas zuspitzt.

Der schräge Randabschnitt 109 ist, wie in Fig. 8 gezeigt, dem ersten Abschnitt 79 zugewandt. Der an dem ersten Abschnitt 79 ausgebildete schräge Randabschnitt 108 ist dem schrägen Randabschnitt 109 zugewandt. Beim Einfädeln des Demontagewerkzeugs 78 gleitet der Schnapper 13 durch einen Zwischenraum 111 zwischen den schrägen Randabschnitten 108 und 109 in den Schnapper-Aufnahmebereich 105 hinein.

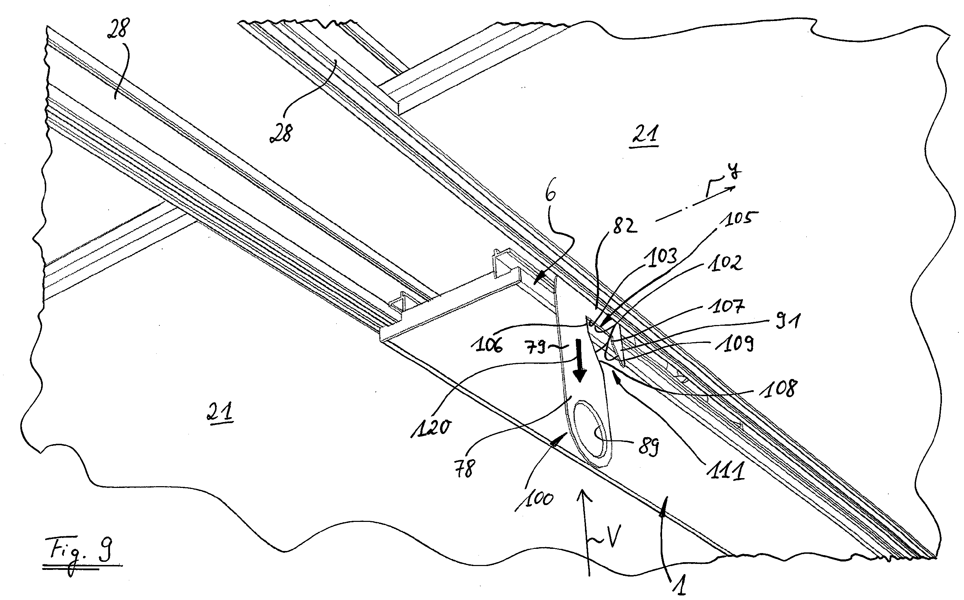

Zum Lösen des Schnappers 13 wird das Demontagewerkzeug 78 in einer Richtung im Wesentlichen parallel zur vertikalen Richtung V entlang des Pfeils 120, siehe Fig. 9, nach unten gezogen, d.h. entgegen der Richtung, in der das Demontagewerkzeug 78 in den Spalt 25 eingeführt wurde. Der erste Abschnitt 79 und die Zunge 91 sind seitlich, d.h. in Querrichtung y, durch den Spalt 25 geführt. Dadurch, dass auch die Zunge 91 über den Schnapper 13 übersteht, wenn der Abschlussrand 103 an der Gleitrampe 46 des Schnappers 13 ansteht, gelingt somit eine zuverlässige Führung des Demontagewerkzeugs 78 im Spalt 25.

Der Abschlussrand 103 des zweiten Abschnitts 82 gleitet beim Ziehen mit Hilfe des Lochs 89 bereichsweise über die geneigte Gleitrampe 46 des Schnappers 13. Der Zug in Pfeilrichtung 120 sowie die gleichzeitige Abstützung und Führung des Demontagewerkzeugs 78 im Spalt 25, insbesondere am Deckenprofilelement 28, bewirken ein Zurückdrücken des Schnappers 13 entgegen der Federkraft in das Schnappergehäuse 15 hinein. Der Schnapper 13 gelangt auf diese Weise außer Eingriff mit dem Deckenprofilelement 28, wodurch sich die Leuchte 1 lösen lässt.

Die nötige Zugkraft in Richtung 120 kann durch einen Monteur mit der Hand aufgebracht werden. Das Loch 89 dient hierbei dem Einführen eines Fingers, um am Demontagewerkzeug 78 wirksamer ziehen zu können. Mit Hilfe des schrägen Verlaufs des Randabschnitts 108 kann erreicht werden, dass die Wirkungslinie der Zugkraft seitlich nicht übermäßig relativ zu dem Schnapper 13 versetzt ist, wodurch Momente um den Schnapper 13 vermindert werden und die Zugkraft wirksamer auf den Schnapper 13 aufgebracht werden kann, d.h. man zieht mehr zentrisch unterhalb des Schnappers 13.

In Fig. 6, welche die in der Rasterdecke 20 montierte Leuchte 1 zeigt, sind die beiden Spalte 25 zwischen der Leuchte 1 und dem auf der einen sowie der anderen Seite der Leuchte 1 befindlichen Deckenprofilelement 28 sowie die Spaltweite S1 bzw. S2 beider Spalte 25 gekennzeichnet. Hierbei sitzt die Leuchte 1 in Fig. 6 nicht exakt mittig zwischen den beiden Deckenprofilelementen 28, S1 ist daher größer als S2. In Fig. 6 ist S1 größer als die Blechdicke t, d.h. in den in Fig. 6 linken Spalt 25 mit der Weite S1 kann das Demontagewerkzeug 78 zum Lösen des Schnappers 13 eingeführt werden.

Bei dem in den Figuren dargestellten Ausführungsbeispiel, welche je zwei Schnapper 13 auf jeder der Längsseiten 7a und 7b der Leuchte 1 aufweist, können zwei Demontagewerkzeuge 78 gleichzeitig eingesetzt werden. Hierbei werden die beiden auf der gleichen Längsseite 7a oder 7b der Leuchte 1 angeordneten Schnapper 13, in Fig. 6 auf der Seite des Spalts 25 mit der Spaltweite S1, mittels jeweils eines Demontagewerkzeugs 78 "eingefangen", d.h. übergriffen, und anschließend zum Beispiel durch gleichzeitiges Ziehen an beiden Demontagewerkzeugen im Wesentlichen zugleich gelöst. Bei der in Fig. 6 beispielhaft gezeigten Konfiguration kann die Leuchte 1 bereits nach Lösen der Schnapper 13 der in der Figur linken Seite der Leuchte 1 etwa in Richtung des Pfeils 136 aus der Rasterdecke 20 herausgekippt und entnommen werden.

Die Breite B der Leuchte 1 und der Abstand A der Deckenprofilelemente 28 können unter Berücksichtigung der Abmessungen der Profilelemente 28 in der Weise gewählt sein, dass die Spaltweiten S1 und S2 - vorzugsweise auch unter Berücksichtigung möglicher Abweichungen der montierten Deckenprofilelemente 28 von deren Sollposition - zumindest in der Summe größer sind als die Blechdicke t des Demontagewerkzeugs 78, anders ausgedrückt, (S1 + S2) > t. Eine Position der Leuchte 1 zwischen den Deckenprofilelementen 28, in der wenigstens einer der Spalte 25 eine Weite S1 oder S2 größer als t aufweist, kann bei Bedarf dann beispielsweise durch geringfügiges Verschieben der montierten Leuchte 1 in Querrichtung y erreicht werden.

Natürlich könnte auch jede der Spaltweiten S1, S2 für sich genommen größer als die Blechdicke t gewählt werden, d.h. S1 > t und S2 > t. Aus ästhetischen Gründen vorteilhaft kann S1 = S2 sein. Dies ist insbesondere dann nützlich, wenn die Leuchte 1 - zum Beispiel aufgrund der Abmessungen von Bestandteilen der Leuchte 1, die im montierten Zustand in der Rasterdecke 20 verschwinden - sich nach Lösen der Schnapper 13 einer der Längsseiten 7a oder 7b nicht leicht herauskippen lässt. In diesem Fall werden vorteilhaft die Schnapper 13 auf beiden Längsseiten 7a, 7b der Leuchte 1 mit Hilfe von Demontagewerkzeugen 78 gelöst und dann die Leuchte 1 aus der Rasterdecke 20 entnommen. Beispielsweise gilt ungefähr S1 = S2 = 1,5 mm.

Die Leuchte 1 kann somit auf einfache Weise durch einen Monteur ohne Zuhilfenahme von Werkzeug und mit geringem Zeitaufwand zwischen den Deckenprofilelementen 28 der Rasterdecke 20 montiert werden. Auch die Demontage der Leuchte 1 kann einfach und schnell erfolgen. Das Demontieren erfordert keine komplizierten Handgriffe und keinen Schraubenzieher oder dergleichen. Lediglich ein oder mehrere der Demontagewerkzeuge 78 werden verwendet, um durch ein einfaches Ziehen die Schnapper 13 zu lösen.

Obwohl die vorliegende Erfindung anhand bevorzugter Ausführungsbeispiele vorstehend vollständig beschrieben wurde, ist sie darauf nicht beschränkt, sondern kann auf vielfältige Art und Weise modifiziert werden.

Insbesondere ist die vorliegende Erfindung für das Montieren von Leuchten an Rasterdeckenprofilen unterschiedlichster Querschnittsform vorteilhaft anwendbar, wobei je nach den Abmessungen und der Querschnittsform des Profils die Position der Schnapper relativ zu den weiteren Bauteilen der Leuchte bei Bedarf an den Profiltyp angepasst wird, um zum Beispiel einen bündigen Einbau der Leuchte zu erzielen.

Zudem ist die Erfindung nicht auf Leuchten mit einer langgestreckten Grundform beschränkt. Es ist denkbar, die Erfindung auf eine Leuchte mit einer beispielsweise quadratischen Grundform oder einer anderen Grundform anzuwenden, wobei bei Bedarf an mehr als zwei Seiten der Leuchte Schnapper vorgesehen sein könnten.

### Bezugszeichenliste

- 1: Leuchte
- 2: Endbereich
- 3: Endbereich
- 4: Anschlusseinrichtung
- 5: Abdeckung
- 6: seitlicher Rand (Leuchte)
- 7a: erste Längsseite (Leuchte)
- 7b: zweite Längsseite (Leuchte)
- 8: Nut
- 8a: Hinterschnitt (Nut)
- 8b: Öffnung (Nut)
- 9: Lichtaustrittsbereich
- 10: Schnappereinheit
- 13: Schnapper
- 15: Schnappergehäuse
- 19: Schraube
- 20: Rasterdecke
- 21: Deckenelement
- 23: Anordnung
- 25: Spalt
- 28: Deckenprofilelement
- 31: Stegabschnitt
- 34: Flanschabschnitt
- 36: nutartiges Profil
- 45: Haltefläche
- 46: Gleitrampe
- 51: Pfeil
- 55: Führungsnut (Schnapper)
- 64: Vorsprung (Schnappergehäuse)
- 66: Abschnitt (Deckenelement)
- 78: Demontagewerkzeug
- 79: erster Abschnitt (Demontagewerkzeug)
- 80: erster Endbereich (erster Abschnitt 79)
- 81: zweiter Endbereich (erster Abschnitt 79)
- 82: zweiter Abschnitt (Demontagewerkzeug)
- 83: Ende (zweiter Abschnitt 82)
- 85: Pfeil
- 89: Loch (Demontagewerkzeug)
- 91: Zunge (Demontagewerkzeug)
- 100: Handhabungsabschnitt (Demontagewerkzeug)
- 102: Aussparung (Demontagewerkzeug)
- 103: Abschlussrand (Aussparung)
- 105: Schnapper-Aufnahmebereich (Demontagewerkzeug)
- 106: Randabschnitt (erster Abschnitt 79)
- 107: Randabschnitt (Zunge 91)
- 108: schräger Randabschnitt (erster Abschnitt 79)
- 109: schräger Randabschnitt (Zunge 91)
- 111: Zwischenraum
- 120: Pfeil
- 136: Pfeil
- A: Abstand (Profile)
- B: Breite (Leuchte)
- H1: Haupterstreckungsrichtung (erster Abschnitt 79)
- H2: Haupterstreckungsrichtung (zweiter Abschnitt 82)
- H3: Haupterstreckungsrichtung (Zunge 91)
- L: Länge (Leuchte)
- LL: Licht
- M: Mittenachse (Leuchte)
- S: Sichtseite (Rasterdecke)
- S1,S2: Spaltweite
- t: Blechstärke
- x: Längsrichtung (Leuchte)
- y: Querrichtung (Leuchte)
- V: vertikale Richtung

## Patentansprüche

1. Leuchte (1) zur Montage in einer Rasterdecke (20),
mit mindestens einem Schnapper (13), welcher derart an der Leuchte (1) angeordnet und derart ausgebildet ist, dass der mindestens eine Schnapper (13) beim Montieren der Leuchte (1) hinter einen Abschnitt (34) eines Elements (28) der Rasterdecke (20) selbsttätig einschnappt und dadurch den Abschnitt (34) des Elements (28) der Rasterdecke (20) zum Halten der Leuchte (1) an der Rasterdecke (20) hintergreift;
wobei die Leuchte (1) ferner ein Schnappergehäuse (15) aufweist und der mindestens eine Schnapper (13) in dem Schnappergehäuse (15) bewegbar geführt ist; und **dadurch gekennzeichnet, dass** der mindestens eine Schnapper (13) und das Schnappergehäuse (15), in dem der mindestens eine Schnapper (13) geführt ist, Komponenten einer Schnappereinheit (10) bilden und die Leuchte (1) mindestens eine Nut (8) aufweist, wobei die Schnappereinheit (10) in der Nut (8) festgelegt ist.

2. Leuchte nach Anspruch 1,
**dadurch gekennzeichnet,**
**dass** der mindestens eine Schnapper (13) eine Gleitrampe (46) aufweist, welche derart angeordnet und ausgerichtet ist, dass die Gleitrampe (46) beim Montieren der Leuchte (1) der Rasterdecke (20) zugewandt und zu einer Richtung (V), entlang der die Leuchte (1) für das Montieren derselben in die Rasterdecke (20) einsetzbar ist, geneigt ist.

3. Leuchte nach Anspruch 1 oder 2,
**dadurch gekennzeichnet,**
**dass** der mindestens eine Schnapper (13) federbelastet ist.

4. Leuchte nach einem der vorstehenden Ansprüche,
**dadurch gekennzeichnet,**
**dass** der mindestens eine Schnapper (13) in dem Schnappergehäuse (15) verschiebbar geführt ist.

5. Leuchte nach einem der vorstehenden Ansprüche,
**dadurch gekennzeichnet,**
**dass** die Schnappereinheit (10) in der Nut (8) geklemmt und dadurch zumindest längs der Nut (8) in dieser festgelegt ist.

6. Leuchte nach einem der vorstehenden Ansprüche,
**dadurch gekennzeichnet,**
**dass** die Leuchte (1) mehrere Schnapper (13) aufweist, wobei mindestens zwei der Schnapper (13) an entgegengesetzten Seiten (7a, 7b) der Leuchte (1) angeordnet sind.

7. Leuchte nach einem der vorstehenden Ansprüche,
**dadurch gekennzeichnet,**
**dass** die Leuchte (1) mindestens zwei an einer Seite der Leuchte (1) entlang einer Längsrichtung (x) der Leuchte (1) voneinander beabstandet angeordnete und in im Wesentlichen gleicher Weise ausgebildete Schnapper (13) aufweist.

8. Anordnung für eine Rasterdecke (20),
mit mindestens einem Deckenprofilelement (28) sowie mit mindestens einer Leuchte (1) gemäß einem der vorstehenden Ansprüche, wobei mindestens ein bewegbarer Schnapper (13) der mindestens einen Leuchte (1) einen Abschnitt (34) des Deckenprofilelements (28) der Rasterdecke (20) hintergreift, wobei die mindestens eine Leuchte (1) mittels des Hintergreifens des Deckenprofilelements (28) durch den Schnapper (13) an der Rasterdecke (20) gehalten ist.

9. Anordnung (23) nach Anspruch 8,
**dadurch gekennzeichnet,**
**dass** das Deckenprofilelement (28) zumindest in einem Bereich seines Querschnitts umgekehrt T-förmig ausgebildet ist und dass der mindestens eine Schnapper (13) der mindestens einen Leuchte (1) abschnittsweise einen Flanschabschnitt (34) des umgekehrt T-förmigen Bereichs hintergreift.

10. Anordnung nach Anspruch 8 oder 9,
**dadurch gekennzeichnet,**
**dass** die Anordnung (23) ferner mindestens ein Deckenelement (21) aufweist, welches abschnittsweise auf dem Deckenprofilelement (28) aufliegt, wobei die mindestens eine Leuchte (1) auf einer Sichtseite (S) der Rasterdecke (20) mit dem Deckenelement (21) und/oder dem Deckenprofilelement (28) insbesondere im Wesentlichen bündig ist.

11. Verfahren zum Montieren einer Leuchte (1), welche gemäß einem der Ansprüche 1 bis 7 ausgebildet ist, in einer Rasterdecke (20), mit den Schritten:
Bereitstellen der Leuchte (1); und
Bewegen der Leuchte (1) derart relativ zu mindestens einem Element (28) der Rasterdecke (20), welches an einem vordefinierten und dem Element (28) für die Bildung der Rasterdecke (20) zugeordneten Bestimmungsort angeordnet und an dem Bestimmungsort fixiert ist, dass mindestens ein Schnapper (13) der Leuchte (1) hinter einen Abschnitt (34) des Elements (28) der Rasterdecke (20) selbsttätig einschnappt und durch das selbsttätige Einschnappen den Abschnitt (34) des Elements (28) der Rasterdecke (20) hintergreift, um die Leuchte (1) an der Rasterdecke (20) zu halten.

## Claims

1. Luminaire (1) for installing in a grid ceiling (20), having at least one catch (13) that is arranged on the luminaire (1) in such a manner and embodied in such a manner that the at least one catch (13) snaps into place automatically behind a portion (34) of an element (28) of the grid ceiling (20) when installing the luminaire (1) and as a consequence engages behind the portion (34) of the element (28) of the grid ceiling (20) so as to retain the luminaire (1) on the grid ceiling (20),
wherein the luminaire (1) moreover comprises a catch housing (15) and the at least one catch (13) is guided in a displaceable manner in the catch housing (15), and
**characterized in that**
the at least one catch (13) and the catch housing (15) in which the at least one catch (13) is guided form components of a catch unit (10) and the luminaire (1) comprises at least one groove (8), wherein the catch unit (10) is fixed in the groove (8).

2. Luminaire according to Claim 1,
**characterized in that**
the at least one catch (13) comprises a sloping slide (46) that is arranged and oriented in such a manner that the sloping slide (46) faces the grid ceiling (20) when installing the luminaire (1) and is inclined in a direction (V) along which the luminaire (1) can be inserted for the installation of said luminaire in the grid ceiling (20).

3. Luminaire according to Claim 1 or 2,
**characterized in that**
the at least one catch (13) is spring loaded.

4. Luminaire according to any one of the preceding claims,
**characterized in that**
the at least one catch (13) is guided in the catch housing (15) in such a manner that it can be displaced.

5. Luminaire according to any one of the preceding claims,
**characterized in that**
the catch unit (10) is clamped in the groove (8) and as a consequence is fixed in the groove (8) at least along said groove.

6. Luminaire according to any one of the preceding claims,
**characterized in that**
the luminaire (1) comprises multiple catches (13), wherein at least two of the catches (13) are arranged on opposing sides (7a, 7b) of the luminaire (1).

7. Luminaire according to any one of the preceding claims,
**characterized in that**
the luminaire (1) comprises at least two catches (13) that are embodied in an essentially identical manner and are arranged spaced from one another on one side of the luminaire (1) along a longitudinal direction (x) of the luminaire (1).

8. Assembly for a ceiling grid (20),
having at least one ceiling profile element (28) and also having at least one luminaire (1) in accordance with any one of the preceding claims, wherein at least one displaceable catch (13) of the at least one luminaire (1) engages behind a portion (34) of the ceiling profile element (28) of the grid ceiling (20), wherein the at least one luminaire (1) is held on the grid ceiling (20) by means of the engagement behind the ceiling profile element (28) by means of the catch (13).

9. Assembly (23) according to claim 8,
**characterized in that**
the ceiling profile element (28) is embodied as an inverted T shape at least in a region of the cross section of said ceiling profile element and that the at least one catch (13) of the at least one luminaire engages in sections behind a flange portion (34) of the inverted T-shaped region.

10. Assembly according to Claim 8 or 9,
**characterized in that**
the assembly (23) moreover comprises at least one ceiling element (21) that lies in sections on the ceiling profile element (28), wherein the at least one luminaire (1) on a visible side (S) of the grid ceiling (20) is in particular essentially flush with the ceiling element (21) and/or the ceiling profile element (28).

11. Method for installing a luminaire (1) that is embodied in accordance with any one of the claims 1 to 7 in a grid ceiling (20), said method having the steps:
providing the luminaire (1); and
moving the luminaire (1) relative to at least one element (28) of the grid ceiling (20), said element being arranged at a pre-defined location that is allocated to the element (28) so as to form the grid ceiling (20) and said element being fixed at the location, in such a manner that at least one catch (13) of the luminaire (1) snaps into place automatically behind a portion (34) of the element (28) of the grid ceiling (20) and by means of automatically snapping into place engages behind the portion (34) of the element (28) of the grid ceiling (20) in order to retain the luminaire (1) on the grid ceiling (20).

## Revendications

1. Lampe (1) destinée à être montée dans un plafond à grille paralume (20),
comprenant au moins un cliquet (13) qui est disposé sur la lampe (1) et est réalisé de manière à ce que l'au moins un cliquet (13), lors du montage de la lampe (1), vienne s'encliqueter automatiquement derrière une section (34) d'un élément (28) du plafond à grille paralume (20) et qu'il vienne en prise derrière la section (34) de l'élément (28) du plafond à grille paralume (20) pour maintenir la lampe (1) sur le plafond de grille paralume(20) ;
dans laquelle la lampe (1) présente en outre un boîtier de cliquet (15) et dans laquelle l'au moins un cliquet (13) est guidé de manière déplaçable dans le boîtier de cliquet (13) ; et **caractérisée en ce que**
l'au moins un cliquet (13) et le boîtier de cliquet (15), dans lequel l'au moins un cliquet (13) est guidé, forment des composants d'une unité à déclic (10) et **en ce que** la lampe (1) présente au moins une rainure (8), l'unité à déclic (10) étant fixée dans la rainure (8).

2. Lampe selon la revendication 1, **caractérisée en ce que**
l'au moins un cliquet (13) présente une rampe de coulissement (46) laquelle est disposée et orientée de manière à ce que la rampe de coulissement (46), lors du montage de la lampe (1), soit tournée vers le plafond à grille paralume (20) et soit inclinée vers une direction (V) le long de laquelle la lampe (1) est insérable dans le plafond à grille paralume (20) pour le montage de celle-ci.

3. Lampe selon la revendication 1 ou 2,
**caractérisée en ce**
**que** l'au moins un cliquet (13) est sollicité par ressort.

4. Lampe selon l'une quelconque des revendications précédentes,
**caractérisée en ce**
**que** l'au moins un cliquet (13) est guidé de manière déplaçable dans le boîtier de cliquet (15).

5. Lampe selon l'une quelconque des revendications précédentes,
**caractérisée en ce**
**que** l'unité à déclic (10) est serrée dans la rainure (8) et qu'elle est ainsi fixée dans celle-ci au moins le long de la rainure (8).

6. Lampe selon l'une quelconque des revendications précédentes,
**caractérisée en ce**
**que** la lampe (1) présente plusieurs cliquets (13), au moins deux des cliquets (13) étant disposés sur des côtés opposés (7a, 7b) de la lampe (1).

7. Lampe selon l'une quelconque des revendications précédentes,
**caractérisée en ce**
**que** la lampe (1) présente au moins deux cliquets (13) disposés sur un côté de la lampe (1) à distance l'un de l'autre selon une direction longitudinale (x) de la lampe (1) et réalisés essentiellement de la même manière.

8. Agencement pour un plafond à grille paralume (20), comportant au moins un élément profilé de plafond (28) ainsi qu'au moins une lampe (1) selon l'une quelconque des revendications précédentes, dans lequel au moins un cliquet (13) déplaçable de l'au moins une lampe (1) est en prise derrière une section (34) de l'élément profilé de plafond (28) du plafond à grille paralume (20), dans lequel l'au moins une lampe (1) est maintenue sur le plafond à grille paralume (20) par le fait d'être en prise derrière l'élément profilé de plafond (28) par le cliquet (13).

9. Agencement (23) selon la revendication 8,
**caractérisé en ce**
**que** l'élément profilé de plafond (28) est réalisé en forme de T inversé au moins dans une partie de sa section transversale et en ce que l'au moins un cliquet (13) de l'au moins une lampe (1) est en prise, par sections, derrière une section de bride (34) de la partie en forme de T inversé.

10. Agencement selon la revendication 8 ou 9,
**caractérisé en ce**
**que** l'agencement (23) présente en outre au moins un élément de plafond (21) lequel repose par sections sur l'élément profilé de plafond (28), dans lequel l'au moins une lampe (1) est notamment essentiellement affleurée avec l'élément de plafond (21) et/ou l'élément profilé de plafond (28) sur un côté visible (S) du plafond à grille paralume (20).

11. Procédé de montage d'une lampe (1), laquelle est réalisée selon l'une quelconque des revendications 1 à 7, dans un plafond à grille paralume (20), comprenant les étapes :
fourniture de la lampe (1) ; et
déplacement de la lampe (1) par rapport à au moins un élément (28) du plafond à grille paralume (20), lequel est disposé à un endroit de destination prédéfini et associé à l'élément (28) pour la formation du plafond à grille paralume (20) et est fixé à l'endroit de destination, de manière à ce qu'au moins un cliquet (13) de la lampe (1) vienne s'encliqueter automatiquement derrière une section (34) de l'élément (28) du plafond à grille paralume (20) et ait prise derrière la section (34) de l'élément (28) du plafond à grille paralume (20) en raison de l'encliquetage automatique afin de maintenir la lampe (1) sur le plafond à grille paralume (20).
